# EUROPEAN PATENT SPECIFICATION

(11) **EP 2 510 033 B1**
(45) Date of publication and mention of the grant of the patent: **21.01.2015**
(21) Application number: 09852140.4
(22) Date of filing: 11.12.2009
(51) Int. Cl.: C08G 18/48, C08G 69/40, C08L 71/02, C08G 63/66, C08L 67/02, C08L 75/08

(54) **IMPROVED ELASTOMERIC COMPOSITIONS**
VERBESSERTE ELASTOMERZUSAMMENSETZUNGEN
COMPOSITIONS ÉLASTOMÈRES AMÉLIORÉES

(43) Date of publication of application: 17.10.2012
(60) Divisional application: 14171011.1
(73) Proprietor: Invista Technologies S.à.r.l., 9000 St. Gallen (CH)
(72) Inventor: SUN, Qun, Wilmington, DE 19808-1106 (US); MCINNIS, Edwin, L., Zachary, LA 70791-5445 (US)
(74) Representative: Cockerton, Bruce Roger
(86) International application number: PCT/US2009/067680
(87) International publication number: WO 2011/071502

(56) References cited:
- US-A- 3 425 999
- US-A- 4 071 492
- US-A- 4 906 729
- US-A- 4 937 314
- US-A- 5 035 893
- US-A- 5 908 690
- US-A- 6 133 400
- US-A1- 2007 117 951
- US-B1- 6 994 913

## Description

### BACKGROUND OF THE INVENTION

The present invention relates to novel elastomeric compositions and structures and products made from them. The structures and products, e.g., films, membranes or coatings, are highly permeable materials having good mechanical strength which overcome deficiencies in the prior art. These materials employ a random copolyether polyol soft segment which has an alkylene oxide, e.g., ethylene oxide (EO), content of from about 20 to about 75 mol % and can conveniently be formed into films, membranes or coatings. These elastomer compositions are copolyether amides. The random copolyether polyol soft segment of the elastomer compositions comprises a glycol derived from random copolymerization of alkylene oxide and tetrahydrofuran (THF), the alkylene oxide having from 2 to 4 carbon atoms, i.e., poly(tetramethylene-co-alkyleneether) glycol.

It is known that the inclusion of ethylene oxide units in a polymer will increase the hydrophilicity of said polymer and affect the water vapor permeability of articles made from that polymer. Due to the importance of this property in certain manufactured goods, such as, for example, breathable waterproof clothing articles and medical articles such as bandages and wound dressings, researchers have tried to affect these properties by a variety of different methods. Many of such methods and the manufactured goods comprising same have troublesome shortcomings or deficiencies which create problems, such as, for example, adding to costs for production, or providing inadequate levels of moisture transport or mechanical properties such as tensile strength.

U. S. Patent No. 6,133,400 teaches that a reactive hot melt adhesive formulation containing a polyether polyol derived from ethylene, propylene or butylene oxide or combinations can be made with a vapor transmission rate (MVTR) of greater than 100 g-mil/m²-day. These materials are used in combination with crystalline polyester polyols, another polyether glycol and a polyisocyanate to obtain the adhesive. These materials offer a degree of moisture transport, but rely upon the presence of moisture to generate the amine necessary for chain extension and hard segment formation. An additional reaction product is carbon dioxide which can produce physical defects. Additionally, the adhesive requires extended storage in order to fully cure through the agency of ambient moisture, and this process must generally be conducted on a supporting material.

U. S. Patent No. 5,908,690 describes a water proof and breathable film produced by extrusion of thermoplastic polyurethane containing 35 to 60 wt % soft segment made from polyethylene oxide or polyethylene oxide reaction products such as ethylene oxide polymers and copolymers, etc. THF is provided as an example of cyclic ether with which ethylene oxide can be copolymerized. The product of this publication relies upon high levels of ethylene oxide units (in the form of polyethylene glycol soft segment) to obtain the desired permeability. No examples of a soft segment other than polyethylene glycol are presented and the level by weight is above 42 wt %. In general, an article produced from polyethylene glycol suffers from the lack of adequate mechanical strength and could also lead to excessive uptake of moisture in the final product. Additianally, the use of a reinforcing agent (silica) and a chain terminator is required in order to obtain the desired properties.

EP 0620506 A2 discloses a charging element used in photocopying which is formed with a moisture permeable synthetic resin as the surface layer. One version of the synthetic resin is a polyurethane resin with a soft segment consisting of a random copolymer of ethylene oxide and tetrahydrofuran with an EO/THF mol ratio of 40/60 to 80/20 and a molecular weight of 600 to 3000. The product of this publication is produced by bulk or solution polymerization with an unspecified soft segment concentration. The material must be melt processable and is further granulated, dissolved in solvent, and applied to a rubber material in order to be of utility. Although permeability and swell ratio are cited as critical requirements for utility, no values of these properties are provided for the compositions claimed.

U. S. Patent No. 5,035,893 discloses a wound covering material constructed from a biopolymeric material and a moisture permeable film. The polyurethane resin of this material is made in solution from a diisocyanate, a chain extender, and a tetrahydrofuran-ethylene oxide copolymer polyol. The polyol contains 20 to 80 wt % ethylene oxide and has a molecular weight of 800 to 3000 dalton. The product of this publication is limited in that the diamine extended polymer is prepared in solution. The product must be precipitated and redissolved in an acceptable solvent for fabrication as a film on a biopolymeric substrate.

EP 0974696 A1 describes a seam sealing composition for water vapor permeable articles. The composition is a solution, which is coated on the article, consisting of a copolyether ester (COPE) in which the soft segment has a carbon/oxygen ratio of 2.0 to 4.3 and a molecular weight of 600 to 4000 dalton. The sealing compositions described are blends of polyethylene glycol (PEG) and polytetramethylene ether glycol (PTMEG), and are further modified by the addition of aliphatic or unsymmetrical aromatic diacid in order to produce lower melting copolyester with adequate solubility in halocarbon solvent. The use of a halocarbon solvent is required in order to obtain the swelling necessary for adhesion. The shortcomings of using the homopolymer PEG, i.e., inferior mechanical properties and excessive water uptake, are anticipated.

EP 0622488 B1 describes a water proof article in which a COPE film is laminated to a textile, said film being made as described in EP 0974696 A1, however no solvent is employed and films are prepared by hot pressing. The product of this publication is comprised of naphthalene dicarboxylic acid and 1,4-butanediol (4GN) hard segment and a polyethylene glycol soft segment or a mixture of polyethylene glycol and polytetramethylene ether glycol.

U. S. Patent No. 4,937,314 discloses thermoplastic copolyether ester elastomers comprising at least 70 weight % soft segments derived from poly (alkylene oxide) glycols and terephthalic acid. The hard segments constitute 10 to 30 weight % of the elastomer and are 95 to 100% poly (1, 3-propylene terephthalate). The specification discloses that the poly (alkylene oxide) glycols have a molecular weight of from 1,500 to 5,000 and a carbon-to-oxygen ratio of from 2 to 4.3. Representative poly (alkylene oxide) glycols include poly (ethylene oxide) glycol, poly (1,2-propylene oxide) glycol, poly(1,3-propylene oxide) glycol, poly(tetramethylene oxide) glycol, etc. In the examples, the soft segments are based on PTMEG and tetrahydrofuran/ethylene oxide copolyether.

U.S. Patent No. 5,128,185 describes thermoplastic copolyether ester elastomers comprising at least 83 weight % soft segments derived from poly (alkylene oxide) glycols and terephthalic acid. The hard segments constitute 10-17 weight % and comprise poly (1,3-propylenebibenzoate). The specification discloses that the poly (alkylene oxide) glycols have a molecular weight of from 1,500 to 5,000 and a carbon-to-oxygen ratio of from 2.5 to 4.3. Representative examples include poly (ethylene oxide) glycol, poly (1,2-propylene oxide) glycol, poly(1,3-propylene oxide) glycol, poly(tetramethylene oxide) glycol, etc. In the examples, the soft segments are based on PTMEG and tetra hyd rofura n/3-methyl tetrahydrofuran.

The techniques and compositions of the above publications are limited in that they employ either polyethylene glycol or blends thereof and other polyols such as the poly(1,2-propylene oxide) glycol (PPG) or the ethylene oxide capped polypropylene glycol (EOPPG) rather than the random copolymers of alkylene oxide, e.g., ethylene oxide, and THF. It is well recognized that thermoplastic polyurethane or copolyether ester derived from the PPG or EOPPG have inferior mechanical properties in comparison to that produced from the polytetramethylene ether glycol (PTMEG). Where glycols derived from polymerization of ethylene oxide and THF (EOTHF random copolymers) are described, they require the use of ancillary ingredients and the material is coated from solution to produce the permeable film. None of these publications teach or suggest elastomeric compositions comprising from 20 to less than 70 wt %, e.g., 69 wt %, first component polyol derived from random copolymerization of alkylene oxide having from 2 to 4 carbon atoms and tetrahydrofuran, i.e., poly(tetramethylene-co-alkyleneether) glycol, and from more than 30, e.g., 31 wt %, to 80 wt % second component copolyether amide, said elastomeric composition having a water vapor transmission rate of greater than 250 g-mil/m²-day and a tensile strength greater than 1500 psi. These new elastomeric compositions have the unique combination of properties disclosed herein, such as, by way of non-limiting examples, water vapor permeability and mechanical strength.

### SUMMARY OF THE INVENTION

Accordingly, it is desirable to provide novel elastomeric compositions and structures and products made from them having desirable properties including a water vapor transmission rate of greater than 250 g-mil/m²-day, especially from about 500 to about 2000 g-mil/m²-day, and good mechanical strength of, for example, a tensile strength >1500 psi according to ASTM D412.

The structures and products of the present invention, e.g., films, are highly permeable materials with good mechanical strength which overcome deficiencies experienced in like structures and products of the prior art. These materials employ a random copolyether polyol soft segment which has an alkylene oxide, e.g., ethylene oxide, content of from about 20 to about 75 mol % and can conveniently be formed into films. These elastomer compositions are amides. The random copolyether polyol soft segment of the elastomer compositions comprises a glycol derived from random copolymerization of alkylene oxide and tetrahydrofuran (THF), the alkylene oxide having from 2 to 4 carbon atoms, i.e., poly(tetramethylene-co-alkyleneether) glycol. The novel elastomer compositions of the present invention are highly useful in, for example, the fibers and films industries. When used as a film, such as for fabric lamination to produce breathable clothing, the novel elastomer compositions of the present invention will have well-balanced flexibility properties, tensile and tear properties, and hydrolysis resistance properties. Another advantage of such novel elastomer compositions may be to enable more economical manufacture of moisture control products having unique properties.

Therefore, an important embodiment of the present invention provides copolyether amide elastomer compositions comprising a glycol derived from random copolymerization of alkylene oxide and tetrahydrofuran (THF), the alkylene oxide having from 2 to 4 carbon atoms, i.e., poly(tetramethylene-co-alkyleneether) glycol. The elastomer compositions of the present invention have unique combinations of properties including ease of processing and reactivity along with a water vapor transmission rate of greater than 250 g-mil/m²-day, especially from about 500 to about 2000 g-mil/m²-day, and good mechanical strength of, for example, a tensile strength >1500 psi according to ASTM D412, and percent elongation of greater than about 200 %, especially from about 300 to about 900%.

More specifically, an important embodiment of the present invention provides novel amide elastomer compositions comprising a glycol derived from random copolymerization of ethylene oxide and tetrahydrofuran (THF), i.e., poly(tetramethylene-co-ethyleneether) glycol.

Still further, an important embodiment of the present invention is a structure or product comprising the novel amide elastomer compositions comprising a glycol derived from random copolymerization of alkylene oxide and tetrahydrofuran (THF), the alkylene oxide having from 2 to 4 carbon atoms, i.e., poly(tetramethylene-co-alkyleneether) glycol. The structure or product comprising this elastomer composition of the present invention may be, for example, a film or coating.

### DETAILED DESCRIPTION

Disclosed is a method to manufacture novel copolyether amide elastomer compositions comprising a glycol derived from random copolymerization of alkylene oxide and tetrahydrofuran (THF), the alkylene oxide having from 2 to 4 carbon atoms, i.e., poly(tetramethylene-co-alkyleneether) glycol, to have certain specific desirable properties. The poly(tetramethylene-co-alkyleneether) glycol may be manufactured by a method described in U.S. Patent No. 4,139,567, incorporated herein by reference, or as described below.

As used herein, the term "polymer" refers to the product of a polymerization reaction, and is inclusive of homopolymers, copolymers, terpolymers, etc.

As used herein, unless specified otherwise, the term "copolymer(s)" refers to polymers formed by the polymerization of at least two different monomers. For example, the term "copolymer" includes the copolymerization reaction product of ethylene and an alpha-olefin (α-olefin), such as by way of example propylene and 1-hexene, or an alkylene oxide such as ethylene oxide and tetrahydrofuran. However, the term "copolymer" is also inclusive of, for example, the copolymerization of a mixture of ethylene, propylene, 1-hexene, and 1-octene, or a mixture of various alkylene glycols and tetrahydrofuran.

As used herein, mol percent ("mol %"), unless noted otherwise, means a percent of a particular component based on the total mols of the mixture containing the component. For example, if a mixture contains three mols of compound A and one mol of compound B, then the compound A comprises 75 mol % of the mixture and the compound B comprises 25 mol %. This theory applies for designations of weight percent ("wt %") as well.

The amide elastomer compositions of the present invention comprise a first component, i.e., a soft segment, of from 20 to less than 70 wt %, e.g., 69 wt %, preferably from 35 to 65 wt %, glycol derived from random copolymerization of alkylene oxide and tetrahydrofuran (THF), the alkylene oxide having from 2 to 4 carbon atoms, e.g., ethylene oxide (EO), a propylene oxide or a butylene oxide. The compositions further comprise a second component, i.e., a hard segment, comprising from more than 30 wt %, e.g., 31 wt %, to 80 wt %, preferably from 35 to 65 wt %, copolyether amide. The compositions exhibit desirable properties including a water vapor transmission rate of greater than 250 g-mil/m²-day, especially from about 500 to about 2000 g-mil/m²-day, and good mechanical strength of a tensile strength >1500 psi according to ASTM D412.

The random copolymer of alkylene oxide and tetrahydrofuran, i.e., poly(tetramethylene-co-alkyleneether) glycol, required for use herein is manufactured by the cationic ring opening copolymerization of alkylene oxide and tetrahydrofuran. The final polyol has a molecular weight from 500 to 3000 dalton and alkylene oxide incorporation from 20 to 75 mol %.

A useful method for manufacturing the poly(tetramethylene-co-alkyleneether) glycol includes steps of (a) polymerizing tetrahydrofuran and at least one alkylene oxide having from 2 to 4 carbon atoms in the presence of an acid catalyst and at least one compound containing reactive hydrogen atoms at a temperature of from 50°C to 80°C to produce a polymerization product mixture comprising oligomeric cyclic ether, copolyether glycol, at least one dimer of the alkylene oxide, and tetrahydrofuran; (b) separating a majority of the tetrahydrofuran and at least a portion of the dimer of the alkylene oxide from the polymerization product mixture of step (a) to produce a crude product mixture comprising oligomeric cyclic ether and copolyether glycol; and (c) separating at least a portion of the oligomeric cyclic ether from the crude product mixture of step (b) to produce an oligomeric cyclic ether stream comprising oligomeric cyclic ether and a product stream comprising poly(tetramethylene-co-alkyleneether) glycol.

In this useful method, the alkylene oxide is selected from the group consisting of ethylene oxide; 1,2-propylene oxide; 1,3-propylene oxide; 1,2-butylene oxide; 2,3-butylene oxide; 1,3-butylene oxide and combinations thereof. The compound containing reactive hydrogen atoms is selected from the group consisting of water; ethylene glycol; 1,4-butanediol; polytetramethylene ether glycol having a molecular weight of from 130 dalton to 400 dalton; copolyether glycols having a molecular weight of from 130 dalton to 400 dalton; and combinations thereof. The acid catalyst is selected from the group consisting of acidified natural clays, acidified natural or synthetic zeolites, sheet silicates optionally activated by acid treatment, acidified zirconium/tin sulfate compounds, compounds comprising at least one catalytically active oxygen-containing molybdenum and/or tungsten moiety applied to an oxidic support, polymeric catalysts which contain sulfonic acid groups and combinations thereof. The tetrahydrofuran component may comprise at least one alkyltetrahydrofuran selected from the group consisting of 2-methyltetrahydrofuran, 3-methyltetrahydrofuran, 3-ethyltetrahydrofuran, and combinations thereof.

The novel elastomer compositions of the present invention and blends or mixtures comprising same, may further comprise an effective amount of a stabilizer additive or compound, such as, for example, to prevent color formation. Many such stabilizers (e.g., antioxidants, ultraviolet light stabilizers and heat stabilizers) are known in the art, any of which may be used with the presently disclosed compatibilized product. Among stabilizers available for use with the present invention are substituted benzophenones, phenolic compounds, carbon black and sulfur compounds.

The novel elastomer compositions of the present invention and blends or mixtures comprising same, may further comprise an effective amount of a colored pigment additive or compound. Many colored pigments for use with the product of the present invention and mixtures comprising same are known in the art, any of which may be used. Among the pigments available for use with the present invention are carbon black, phthalocyanine blues, phthalocyanine greens, anthraquinone dyes, scarlet 2b Lake, azo compounds, acid azo pigments, quinacridones, chromophthalocyanine pyrrols, halogenated phthalocyanines, quinolines, heterocyclic dyes, perinone dyes, anthracenedione dyes, thiozanthene dyes, parazolone dyes, polymethine pigments and combinations thereof.

The novel elastomer compositions of the present invention and blends or mixtures comprising same, may also be combined with other or additional additives or compounds to provide the compositions with particular, desirable characteristics. Many such additives and compounds are known in the art. The use of appropriate additives or compounds is well within the skill of one in the art. Examples of such other or additional additives or compounds include UV stabilizers, anti-oxidants, light stabilizers, flame retardants, antistatic agents, biocides, fragrances, viscosity-breaking agents, impact modifiers, plasticizers, fillers, reinforcing agents, lubricants, mold release agents, blowing agents, nucleating agents and the like.

The amide elastomer compositions of the present invention may be made into film or coating material. Films are made by standard techniques including extrusion, calendaring, film casting, and blow molding. Coating materials are made by standard techniques including solvent polymerization, emulsion polymerization, spray drying and plural component mixing and application.

Films comprising the amide elastomer compositions of the present invention may be used in manufactured goods such as laminations onto textiles, foams, leather, and metal. Non-limiting examples of these uses include breathable waterproof clothing, mattress covers, and medical examination and surgical gloves.

## Claims

1. An elastomeric composition comprising from 20 to less than 70 wt % first component polyol derived from random copolymerization of alkylene oxide having from 2 to 4 carbon atoms and tetrahydrofuran, and from more than 30 to 80 wt % second component copolyether amide, said elastomeric composition having a water vapor transmission rate of greater than 250 g-mil/m²-day measured accordingly to ASTM E96 using 50% humidity and a temperature of 21°C and a tensile strength greater than 1500 psi measured according to ASTM D412, and wherein the first component is a soft segment and the second component is a hard segment.

2. The composition of claim 1 wherein the first component polyol has a molecular weight of from 500 to 3000 dalton and an alkylene oxide incorporation of from 20 to 75 mol %.

3. The composition of claim 1 comprising from 35 to 65 wt % first component polyol derived from random copolymerization of alkylene oxide having from 2 to 4 carbon atoms and tetrahydrofuran, and from 35 to 65 wt % second component copolyether amide.

4. The composition of claim 1 wherein said first component polyol is manufactured by steps comprising: (a) polymerizing tetrahydrofuran and at least one alkylene oxide having from 2 to 4 carbon atoms in the presence of an acid catalyst and at least one compound containing reactive hydrogen atoms at a temperature of from 50°C to 80°C to produce a polymerization product mixture comprising aligomeric cyclic ether, copolyether glycol, at least one dimer of the alkylene oxide, and tetrahydrofuran; (b) separating a majority of the tetrahydrofuran and at least a portion of the dimer of the alkylene oxide from the polymerization product mixture of step (a) to produce a crude product mixture comprising oligomeric cyclic ether and copolyether glycol; and (c) separating at least a portion of the oligomeric cyclic ether from the crude product mixture of step (b) to produce an oligomeric cyclic ether stream comprising oligomeric cyclic ether and a product stream comprising the polyol.

5. The composition of claim 4 wherein the alkylene oxide in the polyol manufacturing step (a) is selected from the group consisting of ethylene oxide; 1,2-propylene oxide; 1,3-propylene oxide; 1,2-butylene oxide; 2,3-butylene oxide; 1,3-butylene oxide and combinations thereof.

6. The composition of claim 4 wherein the compound containing reactive hydrogen atoms in the polyol manufacturing step (a) is selected from the group consisting of water; ethylene glycol; 1,4-butanediol; polytetramethylene ether glycol having a molecular weight of from 130 dalton to 400 dalton; copolyether glycols having a molecular weight of from 130 dalton to 400 dalton; and combinations thereof.

7. The composition of claim 6 wherein the compound containing reactive hydrogen atoms is water.

8. The composition of claim 4 wherein the acid catalyst in the polyol manufacturing step (a) is selected from the group consisting of acidified natural clays, acidified natural or synthetic zeolites, sheet silicates optionally activated by acid treatment, acidified zirconium/tin sulfate compounds, compounds comprising at least one catalytically active oxygen-containing molybdenum and/or tungsten moiety applied to an oxidic support, polymeric catalysts which contain sulfonic acid groups and combinations thereof.

9. The composition of claim 4 wherein the tetrahydrofuran component in the polyol manufacturing step (a) further comprises at least one alkyltetrahydrofuran selected from the group consisting of 2-methyltetrahydrofuran, 3-methyltetrahydrofuran, 3-ethyltetrahydrofuran, and combinations thereof.

10. The composition of claim 4 wherein the alkylene oxide is ethylene oxide, the acid catalyst comprises a polymeric catalyst which contains sulfonic acid groups, and the compound containing reactive hydrogen atoms is selected from the group consisting of water; ethylene glycol; 1,4-butanediol; polytetramethylene ether glycol having a molecular weight of from 130 dalton to 400 dalton; copolyether glycols having a molecular weight of from 130 dalton to 400 dalton; and combinations thereof.

11. The elastomeric composition of claim 1 comprising from 20 to less than 70 wt % first component polyol derived from random copolymerization of ethylene oxide and tetrahydrofuran, and from more than 30 to 80 wt % second component copolyether amide, said elastomeric composition having a water vapor transmission rate of greater than 250 g-mil/m²-day and a tensile strength greater than 1500 psi.

12. The composition of claim 11 wherein the first component polyol has an ethylene oxide incorporation of from 20 to 75 mol %.

13. The composition of claim 11 comprising from 35 to 65 wt % first component polyol derived from random copolymerization of ethylene oxide and tetrahydrofuran, and from 35 to 65 wt % second copolyether amide.

14. A film comprising the elastomeric composition of claim 1, claim 4 or claim 11.

## Patentansprüche

1. Elastomere Zusammensetzung, umfassend 20 bis weniger als 70 Gew.-% als erste Komponente dienendes Polyol aus der statistischen Copolymerisation von Alkylenoxid mit 2 bis 4 Kohlenstoffatomen und Tetrahydrofuran und mehr als 30 bis 80 Gew.-% als zweite Komponente dienendes Copolyetheramid, wobei die elastomere Zusammensetzung eine gemäß ASTM E96 bei 50% Feuchte und einer Temperatur von 21°C gemessene Wasserdampfdurchlässigkeit von mehr als 250 g-mil/m²-Tag und eine gemäß ASTM D412 gemessene Zugfestigkeit von mehr als 1500 psi aufweist, und wobei die erste Komponente ein Weichsegment ist und die zweite Komponente ein Hartsegment ist.

2. Zusammensetzung nach Anspruch 1, wobei das als erste Komponente dienende Polyol ein Molekulargewicht von 500 bis 3000 Dalton und einen Alkylenoxid-Einbau von 20 bis 75 Mol-% aufweist.

3. Zusammensetzung nach Anspruch 1, umfassend 35 bis 65 Gew.-% als erste Komponente dienendes Polyol aus der statistischen Copolymerisation von Alkylenoxid mit 2 bis 4 Kohlenstoffatomen und Tetrahydrofuran und 35 bis 65 Gew.-% als zweite Komponente dienendes Copolyetheramid.

4. Zusammensetzung nach Anspruch 1, wobei das als erste Komponente dienende Polyol dadurch hergestellt wird, dass man (a) Tetrahydrofuran und mindestens ein Alkylenoxid mit 2 bis 4 Kohlenstoffatomen in Gegenwart eines sauren Katalysators und mindestens einer reaktive Wasserstoffatome enthaltenden Verbindung bei einer Temperatur von 50°C bis 80°C polymerisiert, wobei man ein Polymerisationsproduktgemisch erhält, das oligomeren cyclischen Ether, Copolyetherglykol, mindestens ein Dimer des Alkylenoxids und Tetrahydrofuran enthält; (b) von dem Polymerisationsproduktgemisch aus Schritt (a) einen größeren Teil des Tetrahydrofurans und mindestens einen Teil des Dimers des Alkylenoxids abtrennt, wobei man ein Rohproduktgemisch erhält, das oligomeren cyclischen Ether und Copolyetherglykol enthält; und (c) von dem Rohproduktgemisch aus Schritt (b) mindestens einen Teil des oligomeren cyclischen Ethers abtrennt, wobei man einen Strom von oligomerem cyclischem Ether, der oligomeren cyclischen Ether umfasst, und einen Produktstrom, der das Polyol umfasst, erhält.

5. Zusammensetzung nach Anspruch 4, wobei das Alkylenoxid bei dem Schritt (a) der Herstellung des Polyols aus der Gruppe bestehend aus Ethylenoxid; 1,2-Propylenoxid; 1,3-Propylenoxid; 1,2-Butylenoxid; 2,3-Butylenoxid; 1,3-Butylenoxid und Kombinationen davon ausgewählt wird.

6. Zusammensetzung nach Anspruch 4, wobei die reaktive Wasserstoffatome enthaltende Verbindung bei dem Schritt (a) der Herstellung des Polyols aus der Gruppe bestehend aus Wasser; Ethylenglykol; 1,4-Butandiol; Polytetramethylenetherglykol mit einem Molekulargewicht von 130 Dalton bis 400 Dalton; Copolyetherglykolen mit einem Molekulargewicht von 130 Dalton bis 400 Dalton und Kombinationen davon ausgewählt wird.

7. Zusammensetzung nach Anspruch 6, wobei es sich bei der reaktive Wasserstoffatome enthaltenden Verbindung um Wasser handelt.

8. Zusammensetzung nach Anspruch 4, wobei der saure Katalysator bei dem Schritt (a) der Herstellung des Polyols aus der Gruppe bestehend aus angesäuerten natürlichen Tonen, angesäuerten natürlichen oder synthetischen Zeolithen, gegebenenfalls durch Säurebehandlung aktivierten Schichtsilicaten, angesäuerten Zirconium/Zinn-sulfat-Verbindungen, Verbindungen mit mindestens einer katalytisch aktiven sauerstoffhaltigen Molybdän- und/oder Wolframgruppierung auf einem oxidischen Träger, polymeren Katalysatoren mit Sulfonsäuregruppen und Kombinationen davon ausgewählt wird.

9. Zusammensetzung nach Anspruch 4, wobei die Tetrahydrofuran-Komponente bei dem Schritt (a) der Herstellung des Polyols ferner mindestens ein Alkyltetrahydrofuran aus der Gruppe bestehend aus 2-Methyltetrahydrofuran, 3-Methyltetrahydrofuran, 3-Ethyltetrahydrofuran und Kombinationen davon umfasst.

10. Zusammensetzung nach Anspruch 4, wobei es sich bei dem Alkylenoxid um Ethylenoxid handelt, der saure Katalysator einen polymeren Katalysator mit Sulfonsäuregruppen umfasst und die reaktive Wasserstoffatome enthaltende Verbindung aus der Gruppe bestehend aus Wasser; Ethylenglykol; 1,4-Butandiol; Polytetramethylenetherglykol mit einem Molekulargewicht von 130 Dalton bis 400 Dalton; Copolyetherglykolen mit einem Molekulargewicht von 130 Dalton bis 400 Dalton und Kombinationen davon ausgewählt wird.

11. Elastomere Zusammensetzung nach Anspruch 1, umfassend 20 bis weniger als 70 Gew.-% als erste Komponente dienendes Polyol aus der statistischen Copolymerisation von Ethylenoxid und Tetrahydrofuran und mehr als 30 bis 80 Gew.-% als zweite Komponente dienendes Copolyetheramid, wobei die elastomere Zusammensetzung eine Wasserdampfdurchlässigkeit von mehr als 250 g-mil/m²-Tag und eine Zugfestigkeit von mehr als 1500 psi aufweist.

12. Zusammensetzung nach Anspruch 11, wobei das als erste Komponente dienende Polyol einen Ethylenoxid-Einbau von 20 bis 75 Mol-% aufweist.

13. Zusammensetzung nach Anspruch 11, umfassend 35 bis 65 Gew.-% als erste Komponente dienendes Polyol aus der statistischen Copolymerisation von Ethylenoxid und Tetrahydrofuran und 35 bis 65 Gew.-% als zweite Komponente dienendes Copolyetheramid.

14. Folie, umfassend die elastomere Zusammensetzung nach Anspruch 1, Anspruch 4 oder Anspruch 11.

## Revendications

1. Composition élastomère comprenant de 20 à moins de 70 % en poids d'un premier composant polyol obtenu par copolymérisation statistique d'oxyde d'alkylène comportant de 2 à 4 atomes de carbone et de tétrahydrofurane, et de plus de 30 à 80 % en poids d'un second composant copolyéther-amide, ladite composition élastomère ayant une vitesse de transmission de la vapeur d'eau de plus de 250 g-mil/m²-jour mesurée conformément à ASTM E96 en utilisant 50% d'humidité et une température de 21°C et une résistance à la traction de plus de 1500 psi mesurée conformément à ASTM D412, et dans laquelle le premier composant est un segment mou et le second composant est un segment dur.

2. Composition selon la revendication 1 dans laquelle le premier composant polyol possède une masse moléculaire de 500 à 3000 daltons et une incorporation d'oxyde d'alkylène de 20 à 75 % en moles.

3. Composition selon la revendication 1 comprenant de 35 à 65 % en poids du premier composant polyol obtenu par copolymérisation statistique d'oxyde d'alkylène comportant de 2 à 4 atomes de carbone et de tétrahydrofurane, et de 35 à 65 % en poids du second composant copolyéther-amide.

4. Composition selon la revendication 1 dans laquelle ledit premier composant polyol est fabriqué par des étapes comprenant : (a) la polymérisation du tétrahydrofurane et d'au moins un oxyde d'alkylène comportant de 2 à 4 atomes de carbone en présence d'un catalyseur acide et d'au moins un composé contenant des atomes d'hydrogène réactifs à une température de 50°C à 80°C pour produire un mélange de produits de polymérisation comprenant un éther cyclique oligomère, un copolyéther-glycol, au moins un dimère de l'oxyde d'alkylène, et du tétrahydrofurane ; (b) la séparation d'une majorité du tétrahydrofurane et d'au moins une partie du dimère de l'oxyde d'alkylène d'avec le mélange de produits de polymérisation de l'étape (a) pour produire un mélange de produits brut comprenant un éther cyclique oligomère et un copolyéther-glycol ; et (c) la séparation d'au moins une partie de l'éther cyclique oligomère d'avec le mélange de produits brut de l'étape (b) pour produire un courant d'éther cyclique oligomère comprenant un éther cyclique oligomère et un courant de produit comprenant le polyol.

5. Composition selon la revendication 4 dans laquelle l'oxyde d'alkylène dans l'étape de fabrication du polyol (a) est choisi dans le groupe constitué par l'oxyde d'éthylène, l'oxyde de 1,2-propylène, l'oxyde de 1,3-propylène, l'oxyde de 1,2-butylène, l'oxyde de 2,3-butylène, l'oxyde de 1,3-butylène et des combinaisons de ceux-ci.

6. Composition selon la revendication 4 dans laquelle le composé contenant des atomes d'hydrogène réactifs dans l'étape de fabrication du polyol (a) est choisi dans le groupe constitué par l'eau, l'éthylèneglycol, le 1,4-butanediol, un polytétraméthylène-éther-glycol ayant une masse moléculaire de 130 daltons à 400 daltons, les copolyéther-glycols ayant une masse moléculaire de 130 daltons à 400 daltons, et des combinaisons de ceux-ci.

7. Composition selon la revendication 6 dans laquelle le composé contenant des atomes d'hydrogène réactifs est l'eau.

8. Composition selon la revendication 4 dans laquelle le catalyseur acide dans l'étape de fabrication du polyol (a) est choisi dans le groupe constitué par les argiles naturelles acidifiées, les zéolithes naturelles ou synthétiques acidifiées, les phyllosilicates éventuellement activés par un traitement acide, les composés de type sulfate de zirconium/étain acidifiés, les composés comprenant au moins un groupement molybdène et/ou tungstène contenant un atome d'oxygène, catalytiquement actif, appliqué sur un support de type oxyde, des catalyseurs polymères qui contiennent des groupes acide sulfonique, et des combinaisons de ceux-ci.

9. Composition selon la revendication 4 dans laquelle le composant tétrahydrofurane dans l'étape de fabrication du polyol (a) comprend en outre au moins un alkyltétrahydrofurane choisi dans le groupe constitué par le 2-méthyltétrahydrofurane, le 3-méthyltétrahydrofurane, le 3-éthyltétrahydrofurane, et des combinaisons de ceux-ci.

10. Composition selon la revendication 4 dans laquelle l'oxyde d'alkylène est l'oxyde d'éthylène, le catalyseur acide comprend un catalyseur polymère qui contient des groupes acide sulfonique, et le composé contenant des atomes d'hydrogène réactifs est choisi dans le groupe constitué par l'eau, l'éthylèneglycol, le 1,4-butanediol, un polytétraméthylène-éther-glycol ayant une masse moléculaire de 130 daltons à 400 daltons, les copolyéther-glycols ayant une masse moléculaire de 130 daltons à 400 daltons, et des combinaisons de ceux-ci.

11. Composition élastomère selon la revendication 1 comprenant de 20 à moins de 70 % en poids du premier composant polyol obtenu par copolymérisation statistique d'oxyde d'éthylène et de tétrahydrofurane, et de plus de 30 à 80 % en poids du second composant copolyéther-amide, ladite composition élastomère ayant une vitesse de transmission de la vapeur d'eau de plus de 250 g-mil/m²-jour et une résistance à la traction de plus de 1500 psi.

12. Composition selon la revendication 11 dans laquelle le premier composant polyol présente une incorporation d'oxyde d'éthylène de 20 à 75 % en moles.

13. Composition selon la revendication 11 comprenant de 35 à 65 % en poids du premier composant polyol obtenu par copolymérisation statistique d'oxyde d'éthylène et de tétrahydrofurane, et de 35 à 65 % en poids du second copolyéther-amide.

14. Film comprenant la composition élastomère selon la revendication 1, la revendication 4 ou la revendication 11.
